# EUROPEAN PATENT APPLICATION

(11) **EP 1 638 003 A2**
(43) Date of publication of application: **22.03.2006**
(21) Application number: 05015360.0
(22) Date of filing: 14.07.2005
(51) Int. Cl.: G06F 12/08

(54) **Apparatus and method for retrieving data from a data storage system**

(30) Priority: 08.09.2004 JP 2004260347
(71) Applicant: FUJITSU LIMITED, Kawasaki-shi, Kanagawa 211-8588 (JP)
(72) Inventor: Sugizaki, Go, Fujitsu Limited, Kawasaki-shi Kanagawa 211-8588 (JP)
(74) Representative: Nettinger, Manuela Gertrud

(57) **Abstract**

In a memory controller such as a system controller (SC) including a level-3 cache memory (L3-CACHE) for common use of data with a level-2 cache memory (L2-CACHE) within a CPU by forming a chip set such as a server, an effective memory controller and a control method are realized to store the necessary data into the level-2 cache memory (L2 CACHE) of the CPU with a single access, thereby reducing or eliminating deterioration of performance and suppression of throughput caused by memory latency.

## Description

### CROSS-REFERENCE TO RELATED APPLICATIONS

This application is based upon and claims priority to Japanese Patent Application No. 2004-260347, filed on September 8, 2004, the contents being incorporated herein by reference.

### BACKGROUND OF THE INVENTION

In a conventional computer system, the hierarchical structure of memory including the cache memory in the CPU and main memory of the system has been mainly formed of structure including the three layers of first-order or level-1 cache memory (L1 cache) in the CPU, secondary or level-2 cache memory (L2 cache) provided outside of the CPU, and main memory.

High density implementing of LSI has been realized through progress in the semiconductor technology. As a result, the number of transistors to be implemented on an LSI can be greatly increased, the level-2 cache memory can also be built into the CPU, and a tertiary or level-3 cache memory can also be built into the memory controller. Particularly, since a high performance computer system such as a large scale SMP (Symmetrical MultiProcessor) can be realized for a computer system, such as a server which is required to provide higher processing capability for the principal jobs in a company, the processing capability can be improved by shortening the memory access time through common use of the level-3 cache memory from a plurality of processors.

In a higher performance computer system, such as a large scale SMP structure, if a read request is issued to the main memory from the CPU and I/O devices, it is known how to effectively improve the performance because the program and data are locally used for memory access to simultaneously issue the read request for the data block which is actually requested to be read and also the data block adjacent to such data block. The reason is that the storing of a program is generally performed in the sequence of execution of the program, or in the sequence of access. Namely, the storing of program is often conducted in the sequence of execution in the CPU.

With progress in computer architecture, a system has been employed in a high performance computer system, in which a size of the reply data to the read request is determined, when one data entry is defined as n times the size of a data block, in accordance with the registration condition of the cache memory in the data management within the cache memory.

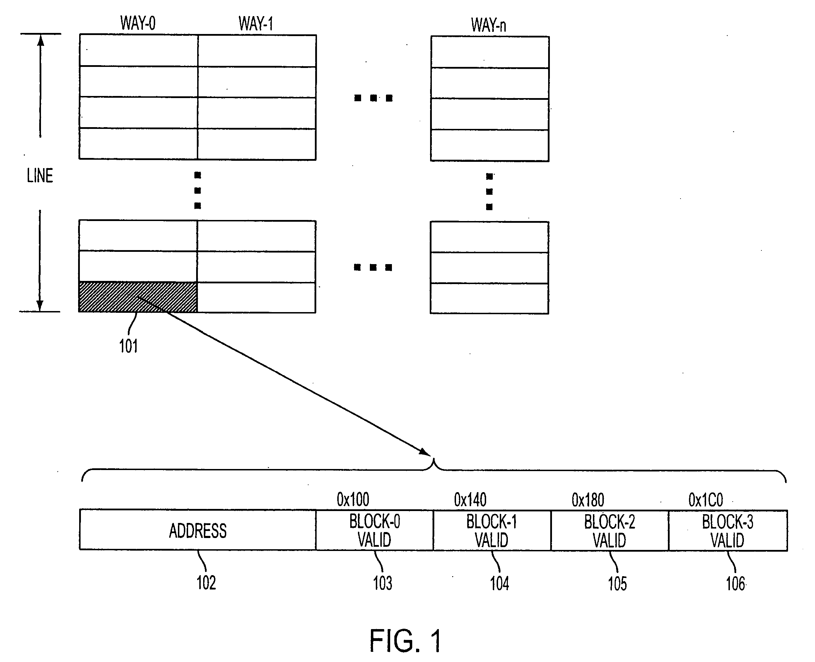

Fig. 1 illustrates an example of structure of a cache memory tag in the level-2 cache memory within the CPU which controls management when a size of the data block is defined as 64 bytes, one data entry is set to 256 bytes as the data registered to the cache memory tag, which is equal to four times the size of the data block. For example, when the cache memory block 101 is considered, the cache memory block 101 includes an address field 102, tag valid for data block-0 (BLOCK-0 VALID) 103, tag valid for data block-1 (BLOCK-1 VALID) 104, tag valid for data block-2 (BLOCK-2 VALID) 105, and tag valid for data block-3 (BLOCK-3 VALID) 106. Here, the BLOCK-0 VALID 103 indicates that the data block of 64 bytes from the address 0x100 is a valid data block. In the same manner, the BLOCK-1 VALID 104 indicates that the data block of 64 bytes from the address 0x140 is a valid data block, the BLOCK-2 VALID 105 indicates that the data block of 64 bytes from the address 0×180 is a valid data block. Similarly, the BLOCK-3 VALID 106 indicates that the data block of 64 bytes from the address 0x1 C0 is a valid data block. In this structure, the transfer size of reply data to the read request for the system controller LSI from the level-2 cache memory within the CPU is determined as 64 bytes block.

When a CPU issues, as a result of an cache miss in the level-2 cache memory thereof, a read request to the main memory to the system controller LSI as the memory controller, the system controller LSI inspects the contents of a tag of the level-2 cache memory within all CPUs on the computer system and selects any of 256 bytes or 64 bytes as the size of reply data to the read request to the main memory. In this case, the CPU executes the registration in the block size of the 256 bytes consisting of 64 bytes × 4 to the level-2 cache memory thereof when the reply data has the size of 256 bytes, or executes the registration in the block size of 64 bytes when the reply data has the size of 64 bytes. The reply data generating condition and operations of the prior arts described above will be described.

### Reply with Data Block of 256 Bytes in the Prior Art

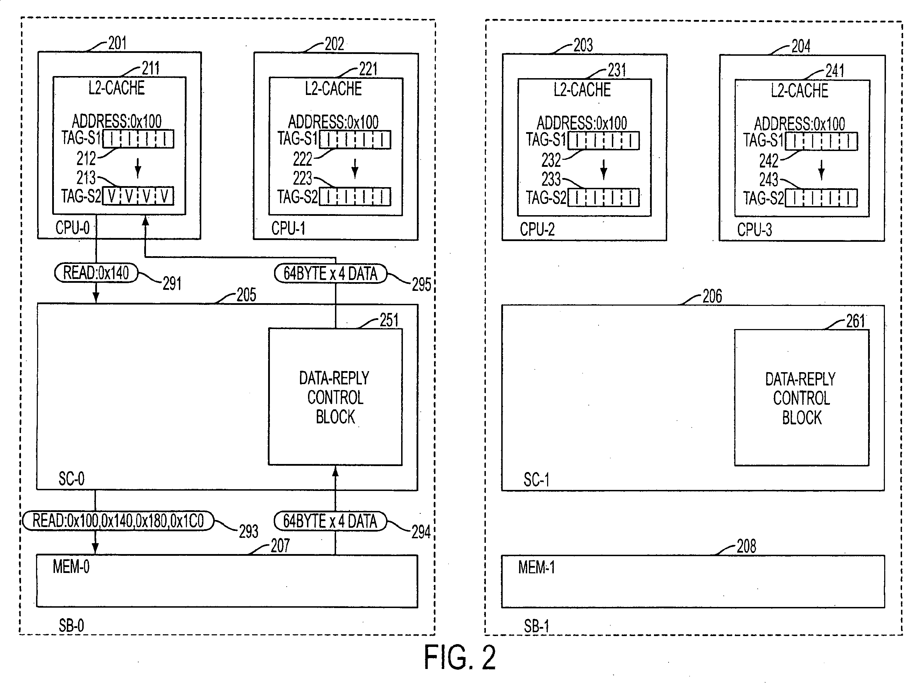

Fig. 2 illustrates an example of a conventional system in which the reply data is attained with a data block of 256 bytes. The system controller LSI-0 (SC-0) 205 mounted on a system board-0 (SB-0) comprises a data reply control block (DATA-REPLY CONTROL BLOCK) 251 which is respectively connected to the CPU-0 201 comprising the level-2 cache memory (L2-CACHE) 211, CPU-1 202 comprising the level-2 cache memory (L2-CACHE) 221 and the main memory-0 (MEM-0) 207.

In the same manner, the system controller LSI-1 (SC-1) 206 mounted on the system board-1 (SB-1) comprises data reply control block (DATA-REPLY CONTROL BLOCK) 261 and is respectively connected with the CPU-2 203 comprising a level-2 cache memory (L2-CACHE) 231, the CPU-3 204 comprising a level-2 cache memory (L2-CACHE) 241, and a main memory-1 (MEM-1) 208. Moreover, the system controller LSI-0 (SC-0) 205 and the system controller LSI-1 (SC-1) 206 are connected with a crossbar switch (XB) not illustrated in the figure to simplify the drawing.

In Fig. 2, the tag status (TAG-S1) 212, 222, 232, and 242, stored in each level-2 cache memory (L2-CACHE) 211, 221, 231 and 241 before generation of read access are all holding invalid status ("I" status), indicating that none of the 64-byte data blocks among the 256-byte data blocks including the 64-byte data block from the address 0×140, which is the read request object from the CPU-0 201, exists effectively within the level-2 cache memory (L2-CACHE).

In this case, the system controller-0 (SC-0) 205 having received the read request 291 to the address 0x100 from the level-2 cache memory (L2-CACHE) 211 in the CPU-0 201 generates, for the main memory-0 (MEM-0) 207, the read request 293 to the addresses 0x100, 0x140, 0x180, and 0xIC0, and the main memory-0 (MEM-0) 207 transmits the reply data 294 based on the 256-byte data block including 64-byte × 4 to the read request addresses. In addition, the data reply control block (DATA-REPLY CONTROL BLOCK) 251 in the system controller LSI (SC-0) completes the read access by transmitting the reply data 295, including the 256-byte data block consisting of 64-byte × 4, to the level-2 cache memory (L2-CACHE) 211.

Here, in regard to the tag status (TAG-S2) 213, 223, 233, 243 in each level-2 cache memory L2-CACHE 211, L2-CACHE 221, L2-CACHE 231 and L2-CACHE 241, after completion of the read access, only the tag status (TAG-S2) 213 of the level-2 cache memory (L2-CACHE) 211 changes, in all bits, to the valid status ("V" status) from the invalid status ("I" status). The tag status (TAG-S2) 223, 233, and 243 of the level-2 cache memories (L2-CACHE) 211, 221, 231 and 241 included in the other CPUs do not change from the status before generation of the read access.

### Reply with 64-byte Data Block in a Conventional System : Part 1

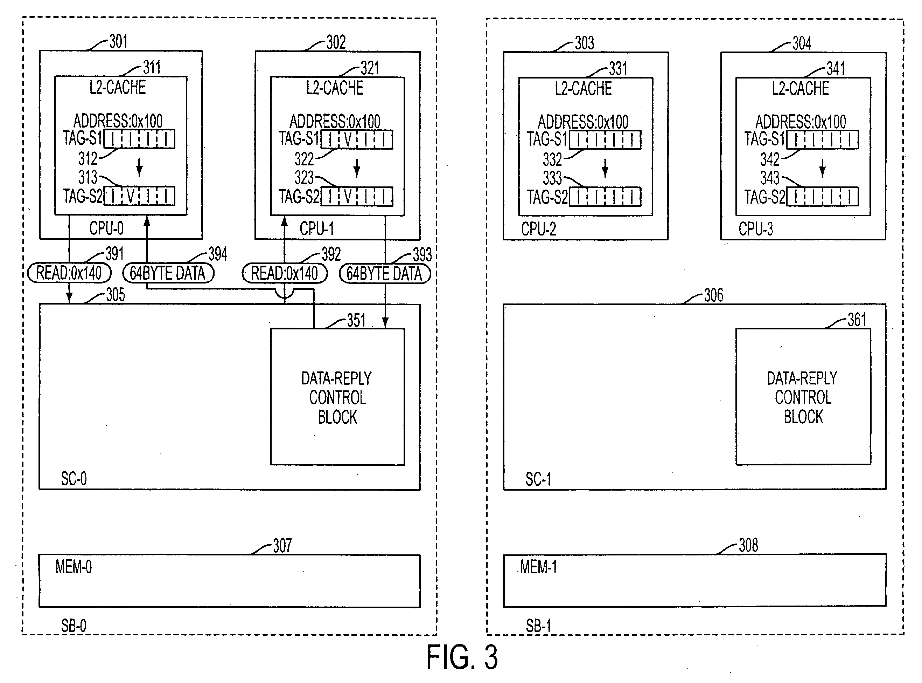

Fig. 3 illustrates a case 1 in which reply data is generated with the 64-byte data block conventionally. A structure of each LSI mounted on the system board-0 (SB-0) and system board-1 (SB-1) is similar to that of Fig. 2. In Fig. 3, only the bits of the 64-byte data block from the address 0x140 in the tag status (TAG-S1) 322 of the level-2 cache memory (L2-CACHE) 321 in the CPU-1 before generation of read access hold the valid status ("V" status). Moreover, the other bits of the tag status (TAG-S1) 322 and all tag status (TAG-S1) 312, 332, 342 of the level-2 cache memories (L2-CACHE) 311, 321, 331 and 341 hold the invalid status ("I" status). In addition, the 64-byte data block from the address 0x140 as the object of the read request from the CPU-0 301 effectively exists in the CPU-1 302.

In this case, the system controller-0 (SC-0) 305, having received the read request 391 to the address 0x140 from the level-2 cache memory (L2-CACHE) 311 in the CPU-0 301, generates a read request 392 to the address 0x140 for the CPU-1 302 and the CPU-1 302 transmits reply data 393 by the 64-byte data block to the read request address. In addition, a data reply control block (DATA-REPLY CONTROL BLOCK) 351 in the system controller LSI (SC-0) 305 completes the read access by transmitting the reply data 394 including the 64-byte data block to the level-2 cache memory (L2-CACHE) 311 in the CPU-0 3D1.

Here, only the tag status (TAG-S2) 313 of the level-2 cache memory (L2-CACHE) 311 in the CPU-0 301 changes, in the corresponding bits, to the valid status ("V" status) from the invalid status ("I" status). After the read access the tag status (TAG-S2) 323, 333, 343 of the level-2 cache memories (L2-CACHE) 321, 331 and 341 in the other CPUs do not change from the condition before generation of the read access.

### Reply with 64-byte Data Block in Conventional System: Part 2

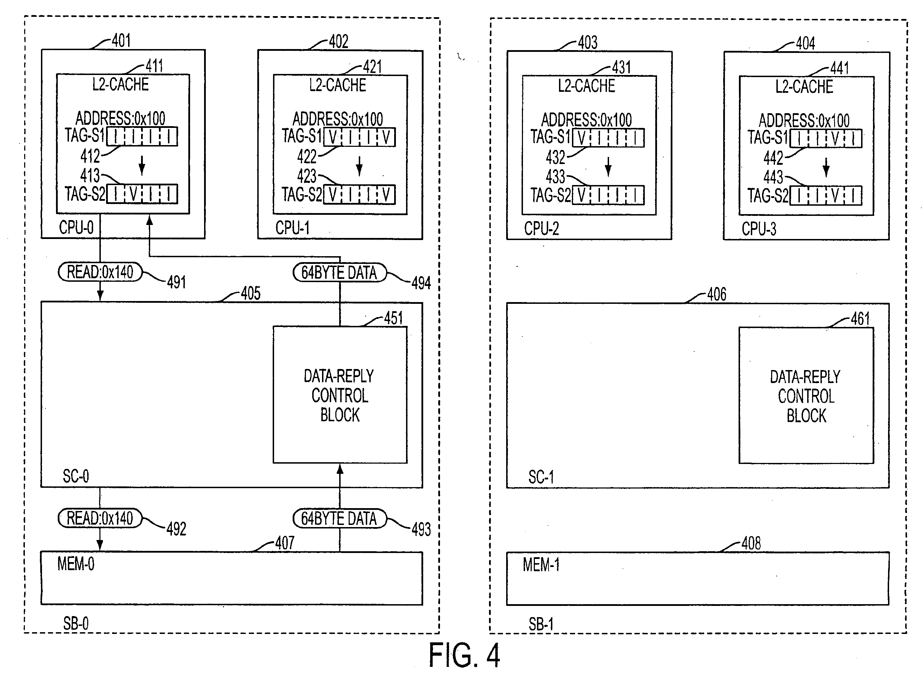

Fig. 4 illustrates a case 2 where reply data is generated with the 64-byte data block conventionally. A structure of each LSI to be mounted on the system board-0 (SB-0) and system board-1 (SB-1) is similar to that of Fig. 2 and Fig. 3. In Fig. 4, a tag status (TAG-S1) 412 of a level-2 cache memory (L2-CACHE) 411 in the CPU-0 401 before generation of the read access holds the invalid status ("I" status) with all bits thereof, and the 64-byte data block from the address 0x140 as the object of the read access does not exist. But the 64-byte data block of the other identical 256-byte data entry exists effectively in regard to the tag status (TAG-S1) 422, 432, 442 of the other level-2 cache memory (L2-CACHE).

In this case, the system controller-0 (SC-0) 405 having received the read request 491 to the address 0x140 from the level-2 cache memory (L2-CACHE) 411 in the CPU-0 401 transmits a read request 492 to the address 0x140 for the main memory-0 (MEM-0) and the main memory-0 (MEM-0) transmits a reply data 493 by the 64-byte data block to the read request address. In addition, a DATA-REPLY CONTROL BLOCK 451 in the system controller LSI-0 (SC-0) 405 completes the read access by transmitting the reply data 494 including the 64-byte data block to the level-2 cache memory (L2-CACHE) 411 in the CPU-0 401.

Here, only the tag status (TAG-S2) 413 of the level-2 cache memory (L2-CACHE) 411 in the CPU-0 401 changes to the valid status ("V" status) from the invalid status ("I" status) from amongst the bits corresponding to the address 0x140 in the tag status (TAG-S2) 413, 423, 433, and 443 in the level-2 cache memories (L2-CACHE) 411, 421, 431 and 441 after completion of the read access. The tag status (TAG-S2) 423, 433, and 443 of the level-2 cache memories (L2-CACHE) 421, 431 and 441 in the other CPUs do not change from the status before generation of the read access.

As described above, in the conventional system controller LSI (SC) used for a high performance computer system including a large scale SMP structure in which only one data entry is formed of a plurality of data blocks and a size of the reply data to a read request is determined with the registration condition of the cache memory for the management of data blocks in the cache memory, since a level-3 cache memory is not provided within the system controller (SC), the cache memory of the system controller LSI (SC) has been controlled rather easily because the reply data for the read request from the CPU exists only in the level-2 cache memory (L2-CACHE) or the main memory (MEM) or the other CPU.

However, it has become possible, due to the progress of semiconductor technology, to include a level-3 cache memory (L3-CACHE) into a system controller (SC) provided as a memory controller. Cache memory control of the system controller (SC) is complicated because reply data to a read request from the CPU is likely assumed to exist not only in the main memory (MEM) and the level-2 cache memory (L2-CACHE) in the other CPU, but also in the level-3 cache memory (L3-CACHE) in the system controller (SC) for relaying the read access and the system controller (SC) on the other system board (SB). Particularly, since one data entry is formed of a plurality of data blocks for the data block management in the cache memory, when some of a plurality of data blocks in one data entry are not valid and some are valid, all blocks of the data entry have been read from the main memory (MEM) or the like even when the blocks of valid status are held. Namely, it has been impossible to perform effective cache memory control in the system controller (SC) of the prior art.

Japanese patent document number JP-A-33472/1982 discloses a memory access control system in which an intermediate buffer memory is provided in a memory controller introducing a swap system (a control system of cache memory introducing a read-through system and a write-through system) for common use of the main memory by the CPU and channel processor in the data processing apparatus. A control mechanism is also provided for searching a management table to determine whether the necessary data exists in the intermediate buffer memory at the time of making access to the main memory. The new data is written into memory of the intermediate buffer memory or main memory, and the access time of the memory is simultaneously controlled based on the operations without waiting for the data corresponding to the relevant address to be read out to the intermediate buffer memory from the main memory. The writing occurs when that the address corresponding to the intermediate buffer memory does not exist when the block store for the main memory is executed from the CPU and the data to be returned to the main memory does not exist. However, the above-identified patent document discloses a block store control system in the memory controller introducing the swap system. What is needed is a different system in which the read access control apparatus and method is not limited only to a cache memory update control system such as the swap system or the like and which can be adapted, without any changes or modifications, to a memory controller of the write-back , system in place of the swap system memory controller.

Japanese patent document JP-A-522090/2001 discloses a system and method for maintaining coherency of cache memory in a coherence system using a directory base memory to use a directory protocol represented by MESI protocol and a non- inclusive cache memory of the third level. However, patent document JP-A-522090/2001 discloses the system employing the directory protocol and non-inclusive cache memory. What is needed is a system which is not restricted to employment of the directory protocol and is not based on the precondition of the system employing a non-inclusive cache memory.

Japanese patent document JP-A 250926/1994 discloses a system to realize non-inclusive cache memory in the data processing system including the cache memories of a plurality of hierarchies. However, the patent document discloses only a system employing non-inclusive cache memory. What is needed is a system employing inclusive cache memory.

Japanese patent document JP-A 259361/1999 discloses a system for realizing non-inclusive cache memory in the high-speed data processing system including cache memories of a plurality of hierarchies. However, the patent document discloses only a system employing non-inclusive cache memory, as employed in Japanese patent document JP-A 25092/1994. Again, what is needed is a system employing inclusive cache memory.

Accordingly, none of the above-identified patent documents disclose, in the technical scope thereof, any effective cache memory control method for the control method of reply data to read request. Therefore, it can be said that these patent documents merely disclose art within the scope of the conventional technology.

In the conventional technology, a system including a level-3 cache memory (L3-CACHE) and a memory controller such as a system controller (SC) or the like, performs data access control for a block of a data entry formed of a plurality of data blocks. Such a system has been accompanied by generation of a problem relating to deterioration of performance due to memory latency and suppression of throughput of the bus because a reply data for the read request of all data blocks included in the data entry has been read from the main memory (MEM) even when a data block of valid status is partially held under the condition that a part of the data entry in response to the read request from the CPU is scattered and held by the main memory (MEM) and level-2 cache memories (L2-CACHE) of other CPUs.

### BRIEF DESCRIPTION OF THE DRAWINGS

Fig. 1 is a diagram illustrating an example of data storing of cache memory in which one data entry is formed of a plurality of data blocks in a conventional system.

Fig. 2 is a diagram of a conventional system illustrating the read access operation when none of the data blocks of 64 bytes exists within any of the cache memories.

Fig. 3 is a diagram of a conventional system illustrating the read access operation when the object of a read request exists in the valid status in the level-2 cache memory.

Fig. 4 is a diagram of a conventional system illustrating the read access operation when the object of the read request does not exist in any of the level-2 cache memories, according to at least one embodiment of the present invention.

Fig. 5 is a diagram illustrating an exemplary environment of the prevent invention including hardware structure of a computer system using a crossbar switch LSI (XB), a system controller LSI (SC) and an I/O system controller LSI (IOSC).

Fig. 6 is a diagram illustrating an example of hardware structure of a system board (SB) mounting a system controller LSI (SC) such as the one depicted in Fig. 5.

Fig. 7 is a block diagram of an exemplary system controller LSI (SC) such as the one depicted in Fig. 5.

Fig. 8 is a block diagram of an exemplary data reply control block comprised in the system controller LSI (SC) such as the one depicted in Fig. 5.

Fig. 9 is a diagram illustrating the read access operation when none of the data blocks exists in the valid status in any of the level-3 cache memories, according to at least one embodiment of the present invention.

Fig. 10 is a diagram illustrating the read access operation when none of the data blocks of 64 bytes exists in any of the level-2 cache memories and any of the data blocks of 64 bytes exist in the valid status in a level-3 cache memory, according to at least one embodiment of the present invention.

Fig. 11 is a diagram illustrating the access operation when the object of the read request exists in the valid status in the level-2 cache memory (L2-CACHE) of another CPU, according to at least one embodiment of the invention.

Fig. 12 is a diagram illustrating the access operation when the object of the read request does not exist in any level-2 cache memory (L2-CACHE), but any of the other data blocks of 64 bytes exists in the level-2 cache memory and the object of the read request, according to at least one embodiment of the invention.

Fig. 13 is a diagram illustrating the access operation when the object of the read request does not exist in any level-2 cache memory (L2-CACHE) or level-3 cache memory, but any of the other data blocks of 64 bytes exists in the valid status in the level-2 cache memory, according to at least one embodiment of the present invention.

Fig. 14 is a diagram illustrating the access operation when none of the data block of 64 bytes among the data entries of 256 bytes exists in the level-2 cache memory (L2-CACHE) but the data block of 64 bytes as the object of the read request and any of the other data blocks of 64 bytes exist in the valid status in the level-3 cache memory (L3-CACHE), according to at least one embodiment of the invention.

Fig. 15 is a diagram illustrating the access operation when the object of the read request from the CPU does not exist in the level-2 cache memories, or level-3 cache memories, and another data block of 64 bytes exists in the valid status in the level-3 cache memory, according to at least one embodiment of the invention.

Fig. 16 is a diagram illustrating the access operation when none of the data blocks of 64 bytes among the data entries of 256 bytes exists in the level-2 cache memories or (L2-CACHE), and the object of the read request does not exist in the level-3 cache memory (L3-CACHE), but the other data block of 64 bytes exists in the valid status in the level-3 cache memory (L3-CACHE), according to at least one embodiment of the present invention.

Fig. 17 is a diagram illustrating the access operation when none of the data blocks of 64 bytes among the data entries of 256 bytes exists in the level-2 cache memories (L2-CACHE) or level-3 cache memories, but the other data blocks of 64 bytes exist in the level-3 cache memory (L3-CACHE) within another system controller (SC), according to at least one embodiment of the invention.

### SUMMARY OF THE INVENTION

The present invention is directed to a method and memory controller for retrieving data from a data storage system. For example, the memory controller of the present invention can be a system controller LSI that includes a level-3 cache memory. Common data can be stored in combination therewith with data in a level-2 cache memory within a CPU by forming chip sets of server and PC, or the like. The data blocks are simultaneously received, as a reply to the read request from the CPU, from a plurality of storage devices such as level-3 cache memory, main memory, and level-2 cache memory in the other CPUs. These data blocks can then be merged into one data entry. As a result, the necessary data can be stored into the level-2 cache memory of the CPU with a single access.

Therefore, it has been thought that the system controller (SC), having received a read request from the CPU issues only necessary least read requests to the level-3 cache memory (L3-CACHE) in the system controller (SC) on another system board (SB) and to the level-2 cache memory (L2-CACHE) in the CPU on the local system board (SB) and merges the data blocks of valid status held by the local system controller (SC). According to this method, the data block in the valid status held by the local system controller can be used effectively, thereby reducing or eliminating the problems relating to deterioration of performance due to memory latency and suppression of throughput of the bus.

The present invention provides a memory controller and method which issues a read request only for a data block in an invalid status when a part of the data entry to be returned by the system controller (SC) in response to the read request from the CPU is in an invalid status. The reply data to the read request and the data block in the valid status held by the local system controller (SC) is then merged.

### DETAILED DESCRIPTION OF THE PREFERRED EMBODIMENTS

The present invention discloses a memory controller connected to at least one CPU including a first cache memory and a main memory to execute a read request from any of the CPUs and includes a second cache memory and a control block for issuing a read request to a storing area of the data block as the read request object and to a storing area of another data block included in an entry to which the first data block also belongs.

The present invention discloses a memory controller connected to at least one CPU including a first cache memory and a main memory to execute the process for a read request from any of the CPUs, and includes a second cache memory and a control block for comparing the valid status of the data block in the first and second cache memories with the read request from any of the CPUs and issuing a read request to respective storing areas when the data block for the read request and another data block included in the entry to which the relevant data block belongs are scattered and stored in a plurality of storing areas.

The present invention discloses a memory controller connected to at least one CPU including a first cache memory and a main memory to execute the process for the read request from any of the CPUs, and includes a second cache memory, a first tag memory for storing valid status of each data block included in the first cache memory of the CPU, a second tag memory for storing valid status of each data block included in the second cache memory, and a control block for comparing contents of the first and second tag memories with the read request from any of the CPUs and issuing a read request to the respective storing areas when the data block corresponding to the read request and another data block included in the entry to which the relevant data block belongs are scattered and stored to a plurality of storing areas.

The present invention can be characterized as receiving a plurality of data blocks respectively transmitted from a plurality of storing areas and transmitting a plurality of received data blocks to the CPU after merging these data blocks to an entry.

The memory controller of the present invention can be characterized by merging a relevant data block and the data blocks transmitted from a plurality of storing areas into an entry and then transmitting this entry to the CPU when at least one data block, among the other data blocks included in the entry including the data block corresponding to the read request issued from the CPU, is stored to the second cache memory. The information processor of the present invention can be characterized as including at least one CPU, a first cache memory provided in the CPU to include a plurality of entries, each of which is formed of a plurality of data blocks, a main memory, at least a memory controller for processing read requests from the CPU; and a second cache memory provided in the memory controller to include a plurality of entries, each of which is formed of a plurality of data blocks, in which the memory controller issues the read requests to the respective storing areas when the data block corresponding to the read request and the other data blocks included in the entry to which the relevant data block belongs are scattered and stored to a plurality of storing areas.

The information processor can be characterized as including a plurality of memory controllers, in which, when a read request is issued from the CPU connected to the other memory controllers, a memory controller inspects a storing area of the data block corresponding to the relevant read request by comparing the valid status of the data block in the first and second cache memories with the read request from the CPU connected to the other memory controllers and transmits the data block to the other memory controllers when the inspection has proved that the data block and at least one data block among the other data blocks included in the entry to which the data block belongs are stored in the first cache memory provided to the CPU connected to the memory controller or in the second cache memory provided in the memory controller.

The information processor of the present invention can be characterized such that the memory controller receives the data blocks transmitted from a plurality of storing areas and corresponding to the read request transmitted therefrom and transmits a plurality of data blocks received to the CPU after merging these data blocks to one entry. The present invention discloses a memory control method for the memory controller to execute a read request from at least one CPU, characterized in comprising receiving the read request issued from any of the CPUs; comparing the valid status of the data block included in the cache memory of the CPU and the valid status of the data block included in the cache memory within the memory controller with the read request, and issuing the read request to the respective storing areas when the comparison has proved that the data block corresponding to the read request and the other data blocks included in the entry to which the relevant data block belongs are scattered and stored to a plurality of storing areas.

The memory control method of the present invention includes receiving the data blocks transmitted from a plurality of storing areas and corresponding to a read request issued from the memory controller; and transmitting a plurality of received data blocks to the CPU after merging these data blocks into one entry.

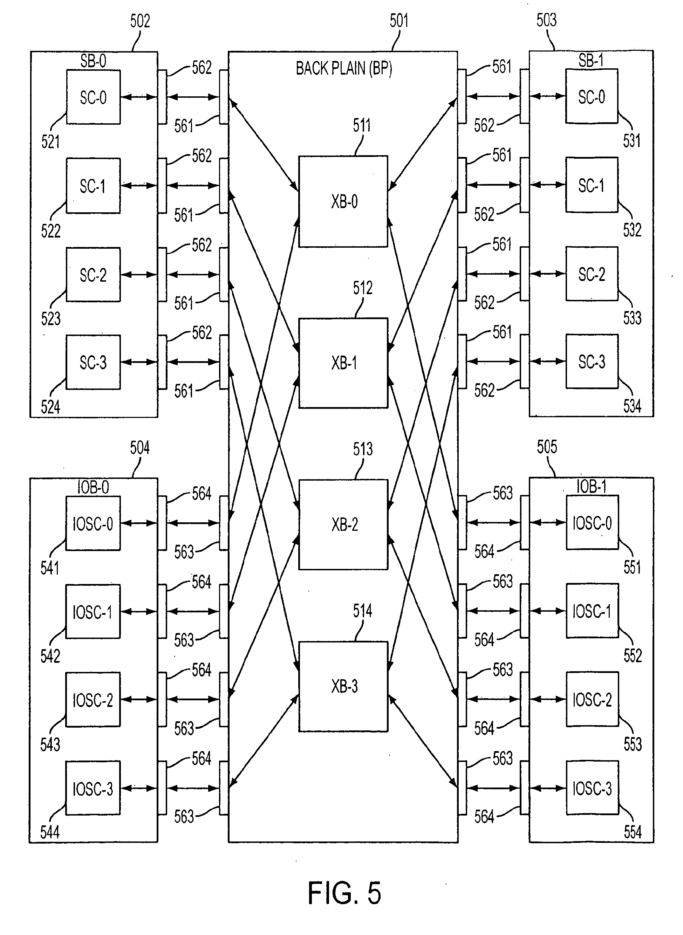

Fig. 5 illustrates an example of a hardware structure of a computer system using a crossbar switch LSI (XB), a system controller LSI (SC) and an I/O system controller LSI (IOSC) as the applicable product environment of the present invention.

A back-plane (BP) 501 mounts a plurality of crossbar switches LSI (XB) 511 to 514 and includes interfaces with system boards (SB) 502, 503 and I/O boards (IOB) 504, 505 via connectors 561 to 564 in view of controlling the connections of the system as a whole. The system boards (SB) 502, 503 respectively mount the memory controller LSI (MAC) for controlling a plurality of system controller LSIs (SC) 521 to 524, 531 to 534, a plurality of CPUs, and a main memory (in the figure, the CPU and LSI such as memory controller LSI (MAC) are not illustrated). The system controller LSI (SC) includes interface for the other system controller LSI (SC), a plurality of CPUs, and memory controller LSI (MAC) mounted on the system board (SB). (Details will be described herein below.)

Therefore, the system boards (SB) 502 and 503 are considered as the expansion block of the processing capability in the relevant computer system. The I/O boards (IOB) 504 and 505 respectively mount a plurality of I/O system controller LSIs (IOSC) 541 to 544, 551 to 554 and PCI slot, or the like. (In the figure, the PCI slot or the like is not illustrated.)

Therefore, the I/O boards (IOB) 504 and 505 are considered as the expansion block of the I/O in the relevant computer system.

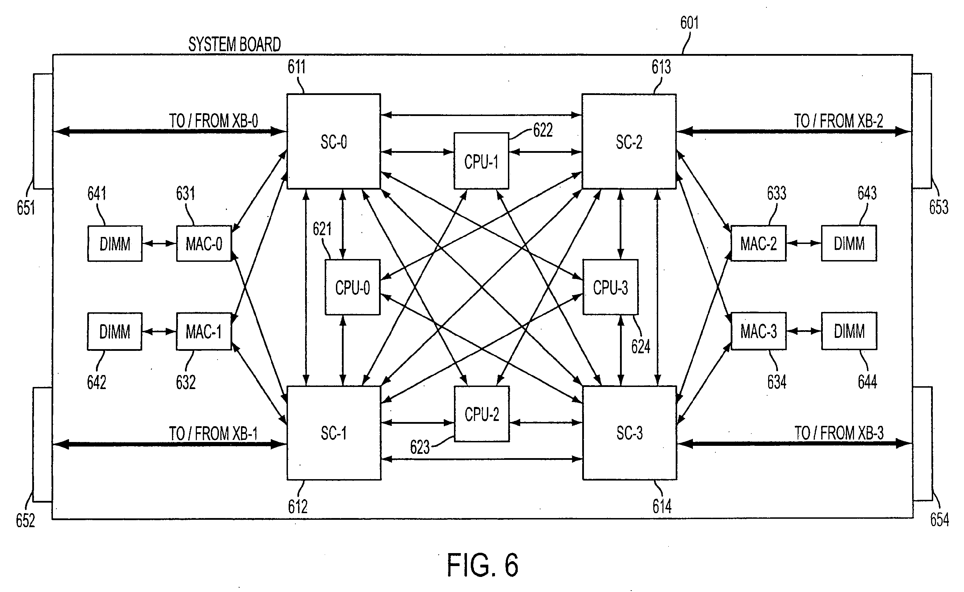

Moreover, Fig. 6 illustrates an example of the hardware structure of the system board (SB) to mount the system controller LSI (SC). The system board (SB) 601 mounts a plurality of system controller LSIs (SC) 611 to 614, a plurality of CPUs 621 to 624, a plurality of memory controller LSIs (MAC) 631 to 634, a plurality of memory modules (DIMM) 641 to 644, and a plurality of connectors 651 to 654. Here, an example of the system controller LSI (SC) 611 will be described. The system controller LSI (SC) 611 is connected with the other system controller LSIs (SC) 612 to 614; a plurality of CPUs 621 to 624, and a plurality of memory controller LSIs (MAC) 631and 632. Moreover, the system controller LSI (SC) 611 also includes an interface, via the connector 651, with the crossbar switch LSI (XB) mounted to the back plane. Accordingly, the system controller LSI (SC) 611 can transmit and receive data to and from the CPU and memory controller (MAC) connected to the system controller LSI (SC) by including a plurality of interfaces.

The system controller LSI (SC) 611 and the CPUs 621 to 624 are connected via the CPU local bus type interface, while the memory controller LSIs 631 and 632 are connected via the memory bus type interface, and the system controller LSI (SC) 611 and the other system controller LSIs (SC) 612 to 614 are connected via the interconnect type interface. In addition, the system controller LSI (SC) 611 and the crossbar switch LSI (XB) are connected via the interconnect type interface. In general, these are connected via the interface which is similar to the interconnect between the system controller LSIs (SC).

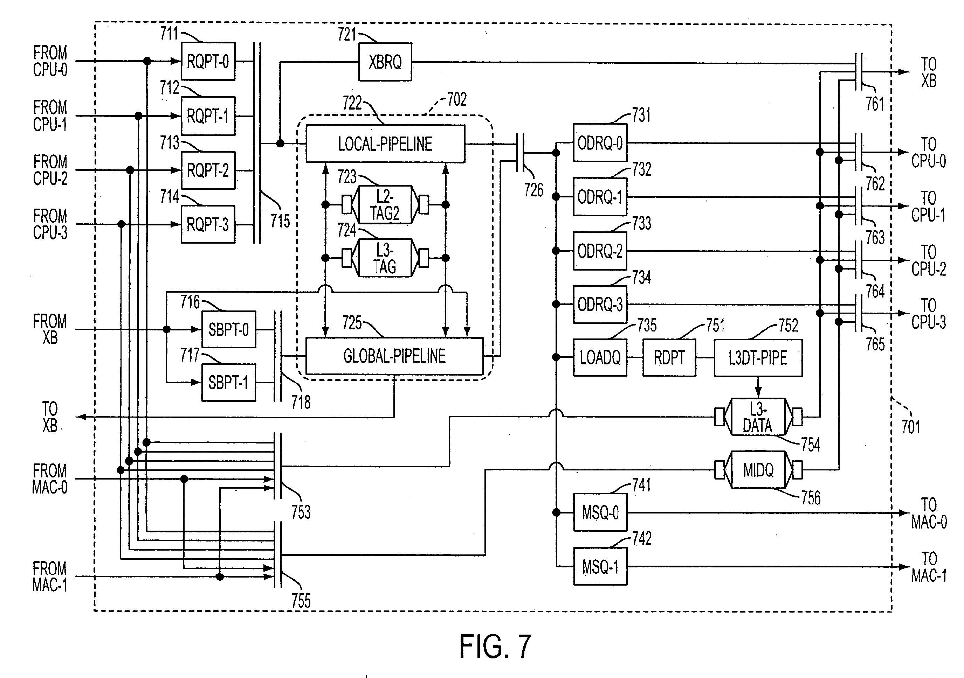

Moreover, Fig. 7 illustrates an example of the hardware structure of the system controller LSI (SC). A system controller LSI (SC) 701 has the interfaces, as described in Fig. 6, with a crossbar switch LSI (XB), a plurality of system controller LSis (SC), a plurality of CPUs, and a plurality of memory controller LSIs (MAC) and also includes a data reply control block 702. This data reply control block 702 is formed of a local access pipeline (LOCAL-PIPELINE) 722, a copy of level-2 cache tag memory (L2-TAG2) 723 of each CPU mounted on the own system board, a level-3 cache tag memory (L3-TAG) 724 and a global access pipeline (GLOBAL-PIPELINE) 725.

First, an access such as a read request from the CPU-0 to CPU-3 on the local system board (SB) mounting the relevant system controller LSI (SC) 701 is respectively queued to the request boards-0 to 3 (RQPT-0 to RQPT-3) 711 to 714. When the relevant access is made to another system board (SB), this access is made through the crossbar switch LSI (SB) passing a crossbar request queue (XBRQ) 721 and a multiplexer 761.

Next, when an access is made to the CPU-0 to CPU-3 or a common level-3 cache memory (L3-DATA) 754 on the local system board (SB), the pipeline control is executed with the local access pipeline (LOCAL-PIPELINE) 722, and the area to be accessed is searched by making access to the copy of level-2 cache tag (L2 TAG2) 723 of the CPU-0 to CPU-3 and the level-3 cache memory tag (L3-TAG) 724. When it is proved by the search that the data to be accessed exists in the CPU-0 to CPU-3, a load request is issued to the CPU-0 to CPU-3 through the order queues ODRQ-0 to ODRQ-3 731 to 734 and multiplexers 762 to 765. Moreover, the data to be accessed exists in the level-3 cache memory (L3-DATA) 754. The pipeline control is executed by the load queue (LADQ) 735, read port (RDPT) 751 and level-3 cache memory access pipeline (L3DT-PIPE) 752, and access is made to the level-3 cache memory (L3-DATA) 754.

When the reply data to the fetch request from the CPU-0 to CPU-3 exists, the fetch data is loaded to the CPU-0 to CPU-3 through the memory storage queue (MSQ-0 to MSQ-1) 741 to 742, move-in data queue (MIDQ) 756, and multiplexers 762 to 765.

In addition, when an access is made from the crossbar switch LSI (XB on the other system board (SB-0 to SB-1), the pipeline control is executed by the global access pipeline (GLOBAL-PIPELINE) 725 through the system board port (SBPT-0 to 1) 716 to 717 and multiplexer 718. The access path after the global access pipeline (GLOBAL-PIPELINE) 725 is similar to that of the local access pipeline (LOCAL-PIPELINE) 722.

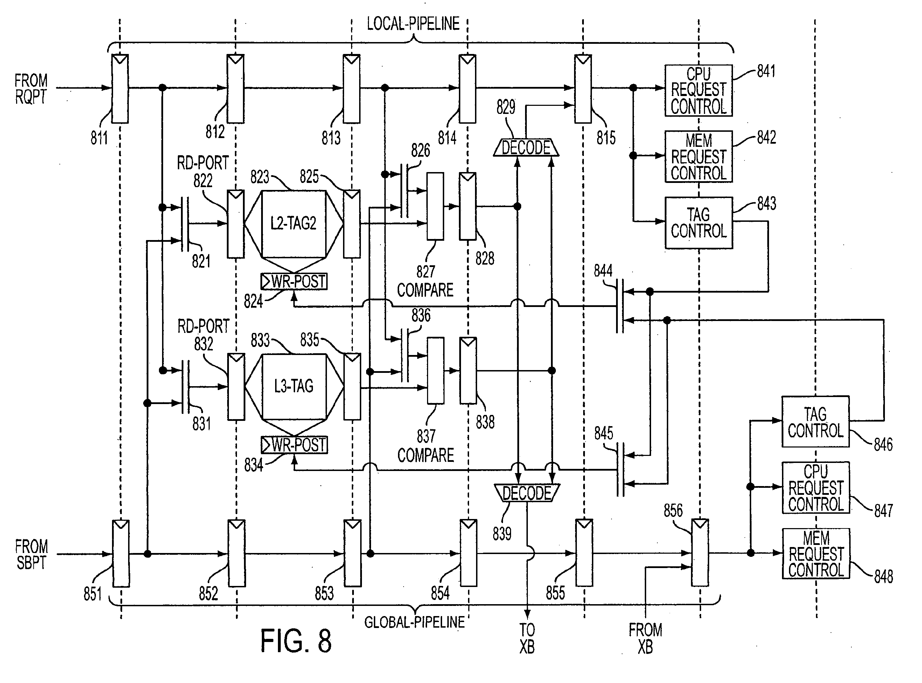

Next, Fig. 8 illustrates an example of the hardware structure of the data reply control block. Staging latches 811 to 815 form the local access pipeline (LOCAL-PIPELINE) and staging latches 851 to 856 form the global access pipeline (GLOBAL-PIPELINE).

First, operations of the local access pipeline (LOCAL-PIPELINE) will be described. When a read access is issued from the CPU0 to 3 on the local system board (SB), an access command flows into the staging latches 811 to 815 forming the local access pipeline (LOCAL-PIPELINE), the address information incorporated to the command passes the multiplexers 821 and 831, and is then inputted to the respective read ports 822 and 832 of the copy of the level-2 cache tag memory (L2-TAG2) 823 and level-3 cache memory (L3-TAG) 833, thereby allowing respective tag memory to be searched.

Since the search result of tag memory is respectively outputted to the output registers 827 and 837, the coherence information is incorporated into the access command flowing through the staging latches 811 to 813 forming the local access pipeline (LOCAL-PIPELINE). The inputs of the multiplexers 826 and 836 are switched to the side of local access pipeline (LOCAL-PIPELINE), and comparison is conducted respectively in the comparators 827 and 837. Outputs of the comparators 827 and 837 are respectively inputted to a decoder 829. Accordingly, for the read request from each CPU mounted on the local system board (SB), the valid/invalid status of each data entry and search information of the comprehensive information of data stored in the level-2 cache memory (L2-CACHE) comprised in each CPU and the level-3 cache memory (L3-CACHE) comprised in the system controller (SC) are outputted to the staging latch 815.

In addition, on the basis of the result of output from the decoder 829, the read request to each CPU mounted on the local system board (SB) is issued from a CPU request control block (CPU REQUEST CONTROL) 841 or the read request to the main memory mounted on the local system board is issued from a memory request control block (MEM REQUEST CONTROL) 842 or the tag status of the copy (L2-TAG2) 823 of the level-2 cache tag memory and level-3 cache memory (L3-TAG) 833 are reflected from a tag control block (TAG CONTROL) 843.

Next, the operations of the global access pipeline (GLOBAL-PIPELINE) will be described. When the read access is issued from the CPU-0 to CPU-3 on another system board (SB), the read command flows through the staging latches 851 to 856 forming the global access pipeline (GLOBAL-PIPELINE), and the address information incorporated into the command passes the multiplexers 821 and 831 and is then inputted to the respective read ports 822 and 832 of the copy (L2-TAG2) 831 of the level-2 cache tag memory and the level-3 cache tag memory (L3-TAG) 833 in order to search the respective tag memories. The respective search results of tag memories are outputted to respective output registers 825 and 835.

In addition, a comparison is executed, as described above, in the comparators 827 and 837 because the coherency information is incorporated into the access command flowing through the staging latches 851 to 853 forming the global access pipeline (GLOBAL-PIPELINE) and the inputs of the multiplexers 826 and 826 are switched to the side of the global access pipeline (GLOBAL-PIPELINE). Outputs of the comparators 827 and 837 are respectively inputted to a decoder 839. Therefore, for the read request from each CPU mounted on another system board (SB), the valid/invalid status and the search information, such as comprehensive information of the data of each data entry stored in the level-2 cache memory (L2-CACHE) comprised in each CPU on the local system board (SB) and in the level-3 cache memory comprised in the system controller (SC), are outputted, through the crossbar switch LSI (XB), to the CPU on another system board (SB) having issued the read access.

Moreover, since the information processed together with the search information in the relevant system board is returned to the staging/latch 856 for the search information outputted to the other system board (SB) via the crossbar switch LSI (XB), the read request to each CPU mounted on the local system board is issued from the CPU request control block (CPU REQUEST CONTROL) 847, or the read request to the main memory mounted on the local system board is issued from the memory request control block (MEM REQUEST CONTROL) 848, or the tag status of the copy of level-2 cache tag memory (L2-TAG2) 823 and level-3 cache tag memory (L3-TAG) 833 are reflected from the tag control block (TAG CONTROL) 846.

### Normal Operation in Reply to the Data Block of 256 bytes in the Embodiment of the Present Invention: Part 1

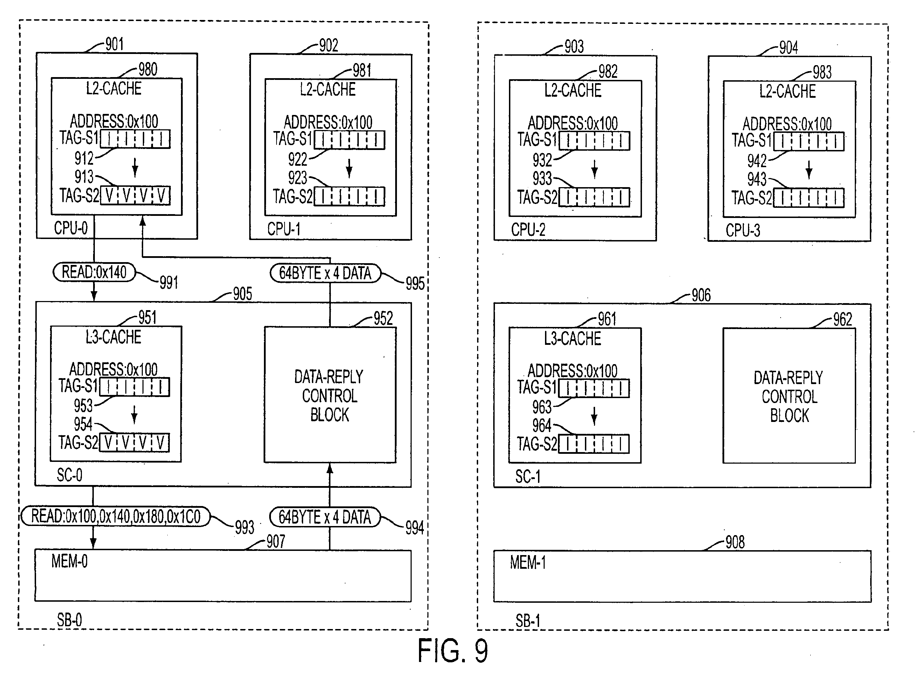

Fig. 9 illustrates Part 1 of the normal operation for sending a reply data with the data block of 256 bytes in the structure of the present invention. A system controller LSI-0 (SC-0) 905 mounted on the system board-0 (SB-0) comprises a level-3 cache memory (L3-CACHE) 951 and a data reply control block (DATA-REPLY CONTROL BLOCK) 952 connected with the CPU-0 901 comprising the level-2 cache memory (L2-CACHE) 980 and the CPU-1 902 comprising the level-2 cache memory (L2-CACHE) 981, and the main memory-0 (MEM-0), In the same manner, the system controller LSI-1 (SC-1) 906 mounted on the system board-1 (SB-1) comprises a level-3 cache memory (L3-CACHE) 961 and a data reply control block (DATA-REPLY CONTROL BLOCK) 962 connected with the CPU-2 903 comprising the level-2 cache memory (L2-CACHE) 982, the CPU-3 904 comprising the level-2 cache memory (L2-CACHE) 983, and the main memory-1 (MEM-1) 908. Moreover, the system controller LSI-0 (SC-0) 905 and the system controller LSI-1 (SC-1) are connected via the crossbar switch (XB), (not illustrated to simplify the drawing).

In Fig. 9, the tag status (TAG-S1) 953 and 954 comprised in the level-3 cache memories (L3-CACHE) 951 and 961 before generation of a read access and the tag status (TAG-S1) 912, 922, 932 and 942 comprised in the level-2 cache memory (L2-CACHE) are all storing the invalid status (I), indicating that none of the data blocks of 64 bytes among the data blocks of 256 bytes including the data block of 64 bytes from the address 0x100 as the read request object from the CPU-0 901, exists in the valid state within all level-3 cache memories and level-2 cache memories.

In this case, the system controller-0 (SC-0) 905 having received the read request 991 to the address 0x140 from the level-2 cache memory (L2-CACHE) 980 comprised in the CPU-0 901 generates the read request 993 in the size of 256 bytes to the address 0x100 for the main memory-0 (MEM-0) 907, and the main memory-0 (MEM-0) transmits the reply data 994 by the data block of 256 bytes to the read request address. In addition, the data reply control block (DATA-REPLY CONTROL BLOCK) 952 in the system controller LSI-0 (SC-0) 905 completes the read access by transmitting the reply data including the data block of 64 bytes to the level-2 cache memory (L2-CACHE) 980.

Here, the tag status (TAG-S2) 954 comprised in the level-3 cache memory (L3-CACHE) 951 after completion of the read access and tag status (TAG-S2) 913 in the level-2 cache memory (L2-CACHE) 911 change, at the bits corresponding to the data block of 256 bytes starting from the address 0x100, to the valid status (V) from the invalid status (I). None of the tag status (TAG-S2) 964 of the other level-3 cache memory (L3-CACHE) or the tag status (TAG-S2) 923, 933 and 943 of the level-2 cache memory (L2-CACHE) changes from the status before generation of the read access.

### Normal Operation in reply to Data Block of 256 Bytes in the Embodiment of the Present Invention: Part 2

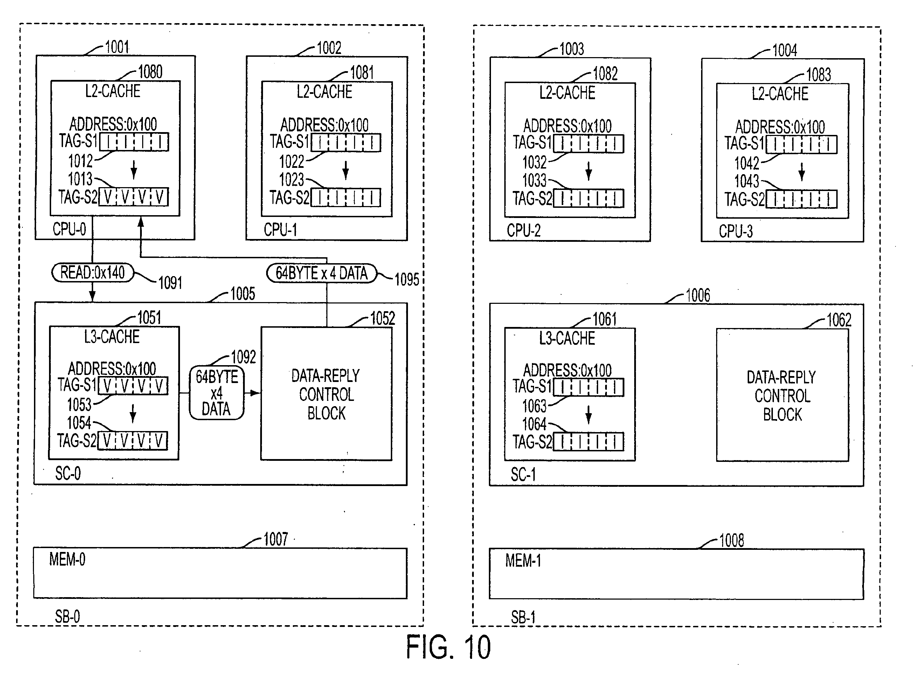

Fig. 10 illustrates part 2 of the normal operation for sending the reply data with the data block of 256 bytes in the structure of the present invention. Structure of each LSI mounted on the system board-0 (SB-0) and system board-1 (SB-1) is similar to that of Fig. 9.

In Fig. 10, the tag status (TAG-S1) 1053 in the level-3 cache memory (L3-CACHE) 1051 before generation of the read access holds the valid status (V) in all bits, moreover the tag status (TAG-S1) 1063 comprised in the level-3 cache memory (L3-CACHE) 1061 and the tag status (TAG-S1) 1012, 1022, 1032and 1042 in each level-2 cache memory (L2-CACHE) are all holding the invalid status (I), and the data block of 256 bytes including the data block of 64 bytes starting from the address 0x140 as the object of the read request from the CPU-0 1001 effectively exists only in the level-3 cache memory (L3-CACHE) 1051.

In this case, the system controller-0 (SC-0) 1005 having received the read request 1091 to the address 0x140 from the level-2 cache memory (L2-CACHE) 1080 in the CPU-0 1001 transmits the reply data by the data block 1092 of 256 bytes starting from the address 0x100 to the data reply control block (DATA REPLY CONTROL BLOCK) 1052. In addition, the data reply control block (DATA-REPLAY CONTROL BLOCK) 1052 in the system controller LSI-0 (SC-0) 1005 completes the read access by transmitting the reply data 1095 by the data block of 256 bytes to the level-2 cache memory (L2-CACHE) 1080 comprised in the CPU-0 1001.

Here, the tag status (TAG-S2) 1013 in the level-2 cache memory (L2-CACHE) 1080 after completion of the read access changes, in the bits corresponding to 256 bytes starting from the address 0x100, to the valid status (V) from the invalid status (I), while any of the tag status (TAG-S2) 1054, 1064 of the level-3 cache memory (L3-CACHE) and the tag status (TAG-S2) 1023, 1033and 1043 of the other level-2 cache memory (L2-CACHE) does not change from the status before generation of the read access.

### Normal Operation in Reply of Data Block of 64 bytes in the Embodiment of the Present Invention: Part 1

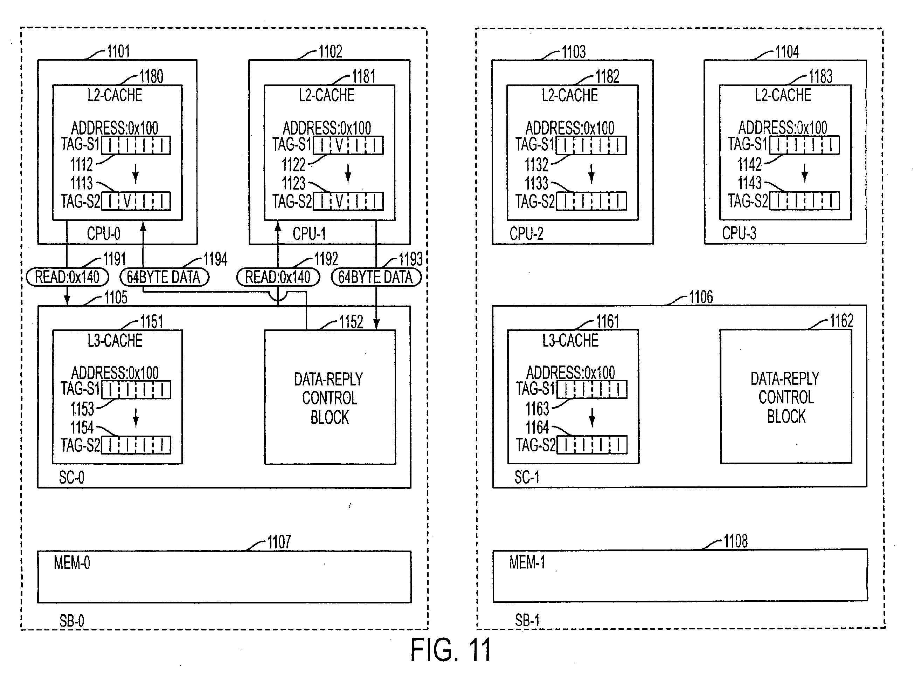

Fig. 11 illustrates part 1 of the normal operation in reply of data with the data block of 64 bytes in the structure of the present invention. Structure of each LSI mounted on the system board-0 (SB-0) and system board-1(SB-1) is similar to that of Fig. 9 and Fig. 10.

Fig. 11 illustrates a structure of the present invention, in which the data block of 64 bytes as the object of read request among the data entry of 256 bytes including the data block of 64 bytes as the read request from the CPU exists in the valid status within the level-2 cache memory (L2-CACHE) of another CPU.

In this case, the system controller-0 (SC-0) 1105 having received the read request 1191 to the address 0x140 from the level-2 cache memory (L2-CACHE) 1180 in the CPU-0 1101 issues the read request 1192 for the level-2 cache (L2-CACHE) 1181 in the CPU 1102 storing the valid data block of 64 bytes starting from the address 0x140 and the data reply control block (DATA-REPLY CONTROL BLOCK) 1152 receives the reply data 1193 by the data block of 64 bytes corresponding to the read request 1192. In addition, the data reply control block (DATA-REPLY CONTROL BLOCK) 1152 completes the read access by transmitting the data block 1194 of 64 bytes to the level-2 cache (L2-CACHE) 1180 in the CPU-0 1101.

Here, the tag status (TAG-S2) 1113 in the level-2 cache memory (L2-CACHE) 1180 after completion of the read access changes, at the bits corresponding to 64 bytes from the address 0x140, to the valid status (V) from the invalid status (I), and any of the tag status (TAG-S2) 1154and 1164 of the level-3 cache memory (L3-CACHE) and the tag status (TAG-S2) 1123, 1133and 1143 of the other level-2 cache memories (L2-CACHE) does not change from the status before generation of the read access.

### Normal Operation in Reply of Data Block of 64 bytes in the Embodiment of the Present Invention: Part 2

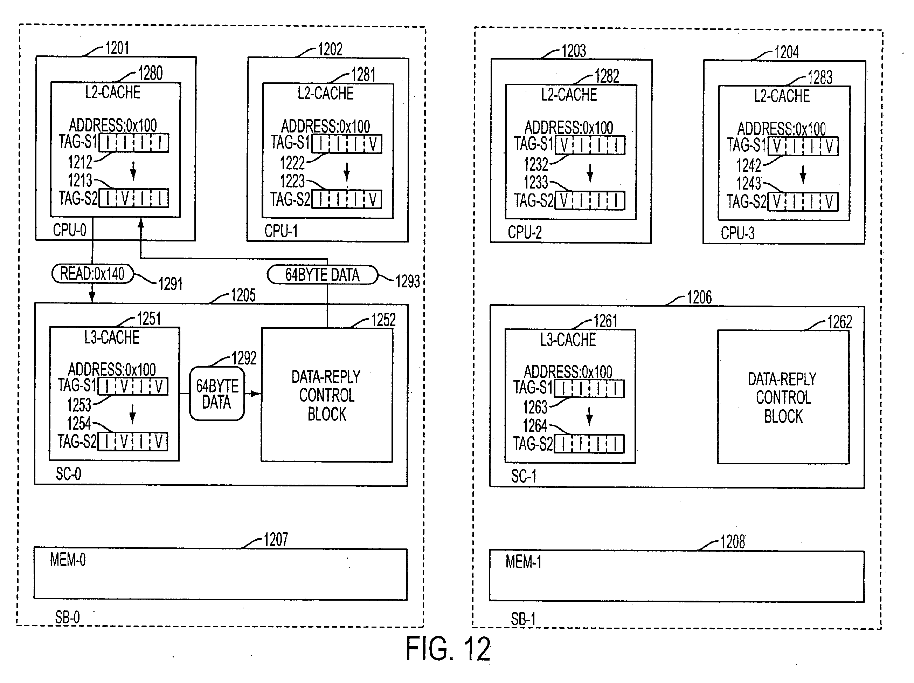

Fig. 12 illustrates a part 2 of the normal operation in reply of data with the data block of 64 bytes in the structure of the present invention. Structure of each LSI mounted on the system board-0 (SB-0) and system board-1 (SB-1) is similar to that of Fig. 9 to Fig. 11.

Fig. 12 illustrates a structure of the present invention in which the data block of 64 bytes as the object of read request among the data entry of 256 bytes including the data block of 64 bytes as the object of read request from the CPU does not exist in any level-2 cache memory (L2-CACHE) but any of the other data blocks of 64 bytes exists in the level-2 cache memory (L2-CACHE) and the data block of 64 bytes as the object of the read request exits, in the valid status, within the level-3 cache memory L3-CACHE 1251.

In this case, the system controller-0 (SC-0) 1205 having received the read request 1291 to the address 0x140 from the level-2 cache memory (L2-CACHE) 1280 in the CPU-0 1201 transmits the reply data by the data block 1292 of 64 bytes starting from the address 0x140 to the data reply control block (DATA-RELY CONTROL BLOCK) 1252. Moreover, the data reply control block (DATA-REPLY CONTROL BLOCK) 1252 in the system controller LSI-0 (SC-0) 1205 completes the read access by transmitting the reply data 1293 by the data block of 64 bytes to the level-2 cache memory (L2-CACHE) 1280 in the CPU-0 1201.

Here, the tag status (TAG-S2) 1212 in the level-2 cache memory (L2-CACHE) 1280 after completion of the read access changes, in the bits corresponding to 64 bytes from the address 0x140, to the valid status (V) from the invalid status (I) and none of the tag status (TAG-S2) 1254 and 1264 of the level-3 cache memories (L3-CACHE) 1251 and 1261, respectively, and the tag status (TAG-S2) 1223, 1233 and 1243 of the other level-2 cache memories (L2-CACHE) changes from the status before generation of the read access. Normal Operation in Reply of Data Block of 64 bytes in the Embodiment of the Present Invention: Part 3

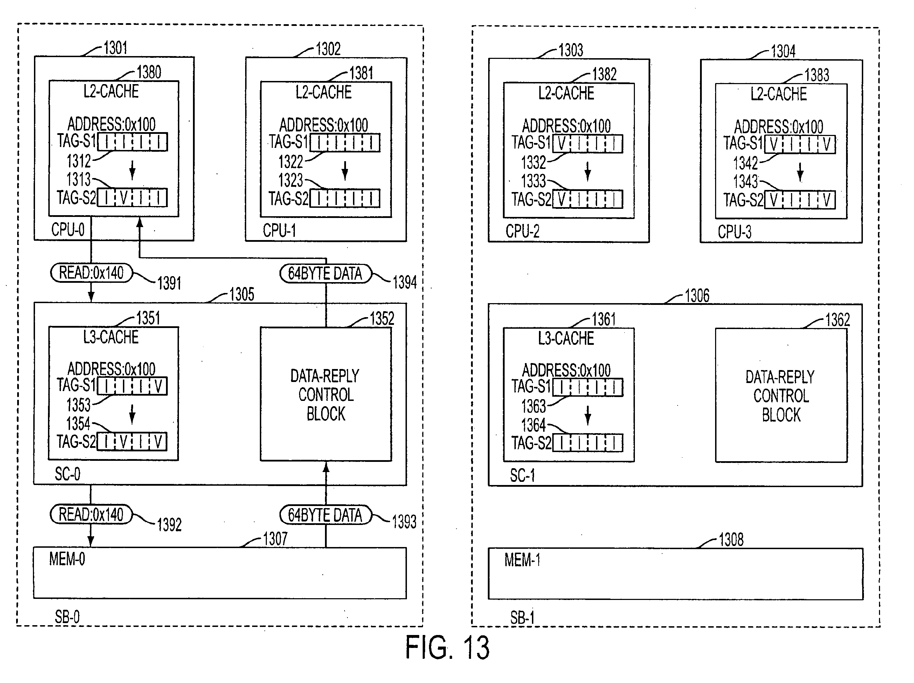

Fig. 13 illustrates part 3 of the normal operation of reply data by the data block of 64 bytes in the structure of the present invention. Structure of each LSI mounted on the system board-0 (SB-0) and system board-1 (SB-1) is similar to that of Fig. 9 to Fig. 12.

Here, Fig. 13 illustrates a structure of the present invention, in which the data block of 64 bytes as the object of read request among the data entry of 256 bytes including the data block of 64 bytes as the object of the read request from the CPU does not exist in any of the level-2 cache memories (L2-CACHE) and level-3 cache memories (L3-CACHE), but any of the other data of 64 bytes exists, in the valid status, within the level-2 cache memories (L2-CACHE).

The system controller-0 (SC-0) 1305 having received the read request 1391 to the address 0x140 from the level-2 cache memory (L2-CACHE) 1380 in the CPU-0 1301 generates the read request 1392 in the size of 64 bytes to the address 0x140 the main memory-0 (MEM-0) 1307, and the main memory-0 (MEM-0) 1307 transmits the reply data 1393 by the data block of 64 bytes to the read request address.

In addition, the data reply control block (DATA-REPLY CONTROL BLOCK) 1352 in the system controller LSI-0 (SC-0) 1305 completes the read access by transmitting the reply data 1394 by the data block of 64 bytes to the level-2 cache memory (L2-CACHE) 1311 in the CPU-0 1301.

Here, the tag status (TAG-S2) 1354 in the level-3 cache memory (L3-CACHE) 1351 and the tag status (TAG-S2) 1313 in the level-2 cache memory (L2-CACHE) 1380 change, in the bits corresponding to the data block of 64 bytes starting from the address 0x140, to the valid status (V) from the invalid status (I), and none of the tag status (TAG-S2) 1364 of the other level-3 cache memory (L3-CACHE) and the tag status (TAG-S2) 1323 and 1333 of the level-2 cache memory (L2-CACHE) changes from the status before generation of read access.

### Normal Operation in Reply of Data Block of 64 Bytes in the Embodiment of the Present Invention: Part 4

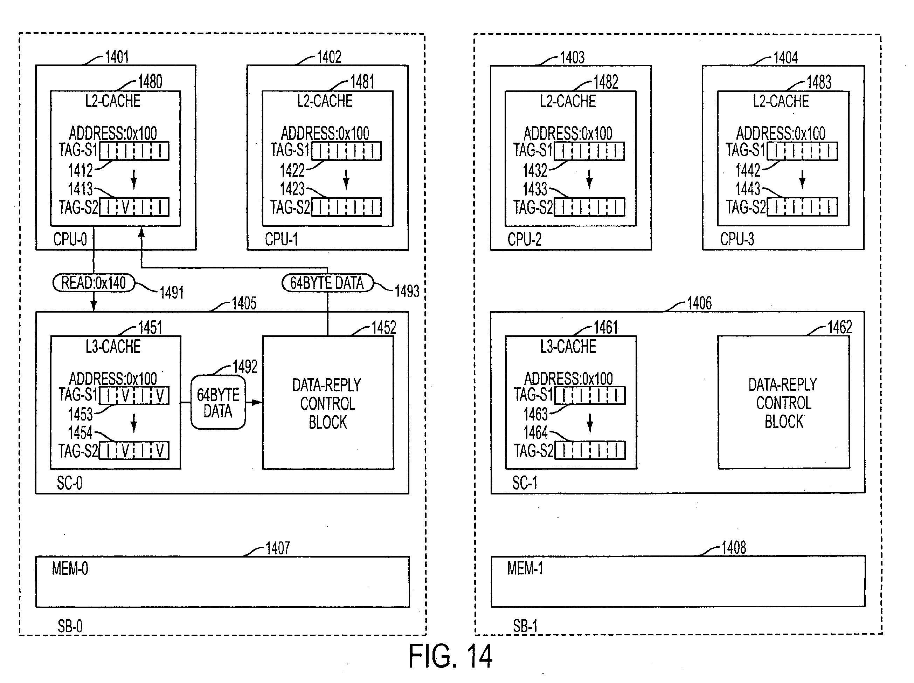

Fig. 14 illustrates part 4 of normal operation in the reply data by the data block of 64 bytes in the structure of the present invention. Structure of each LSI mounted on the system board-0 (SB-0) and system board-1 (SB-1) is similar to that of Fig. 9 to Fig. 13.

Here, Fig. 14 illustrates a structure of the present invention, in which none of the data blocks of 64 bytes among the data entries of 256 bytes including the data block of 64 bytes as the object of the read request from the CPU exists in the level-2 cache memory (L2-CACHE), but the data block of 64 bytes as the object of the read request and the other data block of 64 bytes exist in the level-3 cache memory (L3-CACHE) in the valid status.

In this case, the system controller-0 (SC-0) 1405 having received the read request 1491 to the address 0x140 from the level-2 cache memory (L2-CACHE) 1480 in the CPU-0 1401 transmits the reply data by the data block 1492 of 64 bytes starting from the address 0x140 to the data reply control block (DATA-REPLY CONTROL BLOCK) 1452. In addition, the data reply control block (DATA-REPLY CONTROL BLOCK) 1452 in the system controller LSI-0 (SC-0) completes the read access by transmitting the reply data 1493 by the data block of 64 bytes to the level-2 cache memory (L2-CACHE) 1480.

Here, the tag status (TAG-S2) 1412 in the level-2 cache memory (L2-CACHE) 1480 after completion of the read access changes in the bits corresponding to the 64 bytes from the address 0x140 to the valid status (V) from the invalid status (I), and any of the tag status (TAG-S2) 1454, 1464 of the level-3 cache memory (L3-CACHE) and the tag status (TAG-S2) 1423, 1433, 1443 of the other level-2 cache memories (L2-CACHE) does not change from the status before generation of the read access.

### Normal Operation in Reply of Data Block of 64 Bytes in the Embodiment of the Present Invention: Part 5

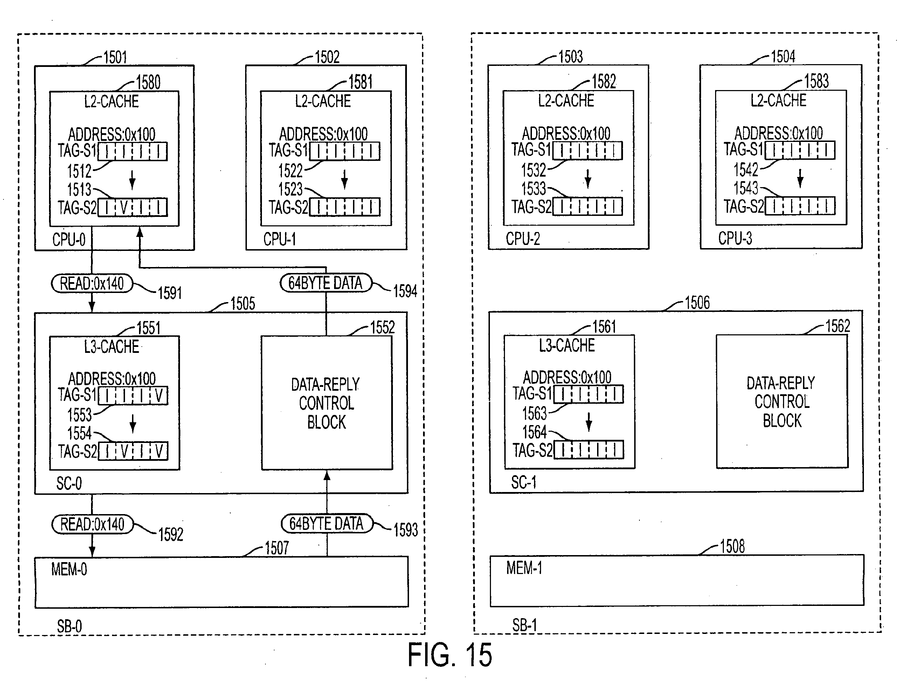

Fig. 15 illustrates part 5 of the normal operation for reply data by the data block of 64 bytes in the structure of the present invention. Structure of each LSI mounted on the system board-0 (SB-0 and system board-1 (SB-1) is similar to that of Fig. 9 to Fig. 14.

Here, Fig. 15 illustrates a structure of the present invention, in which none of the data blocks of 64 bytes among the data entries of 256 bytes including the data block of 64 bytes as the object of the read request from the CPU exists in the level-2 cache memory (L2-CACHE) and the data block of 64 bytes as the object of the read request also does not exist in the level-3 cache memory (L3-CACHE) but another data block of 64 bytes exist in the level-3 cache memory (L3-CACHE) in the valid status.

In this case, the system controller-0 (SC-0) 1505, having received the read request 1591 to the address 0x140 from the level-2 cache memory (L2-CACHE) 1580 in the CPU-0 1501 generates the read request 1592 of 64 bytes to the address 0x140 to the main memory-0 (MEM-0) 1507, and the main memory-0 (MEM-0) 1507 transmits the reply data 1593 by the data block of 64 bytes to the read request address.

In addition, the data reply control block (DATA-REPLY CONTROL BLOCK) 1552 in the system controller LSI-0 (SC-0) 1505 completes the read access by transmitting the reply data 1594 by the data block of 64 bytes to the level-2 cache memory (L2-CACHE) 1580 in the CPU-0 1501.

Here, the tag status (TAG-S2) 1554 in the level-3 cache memory (L3-CACHE) 1551 after completion of the read access and the tag status (TAG-S2) 1513 in the level-2 cache memory (L2-CACHE) 1580 are changed in the bits corresponding to the data block of 64 bytes starting from the address 0x140 to the valid status (V) from the invalid status (I) and any of the tag status (TAG-S2) 1564 of the other level-3 cache memory (L3-CACHE) and the tag status (TAG-S2) 1523, 1533 and 1543 of the level-2 cache memories (L2-CACHE) does not change from the status before generation of the read access.

### Merge Operation in Reply of Data Block of 64 Bytes in the Embodiment of the Present Invention: Part 1

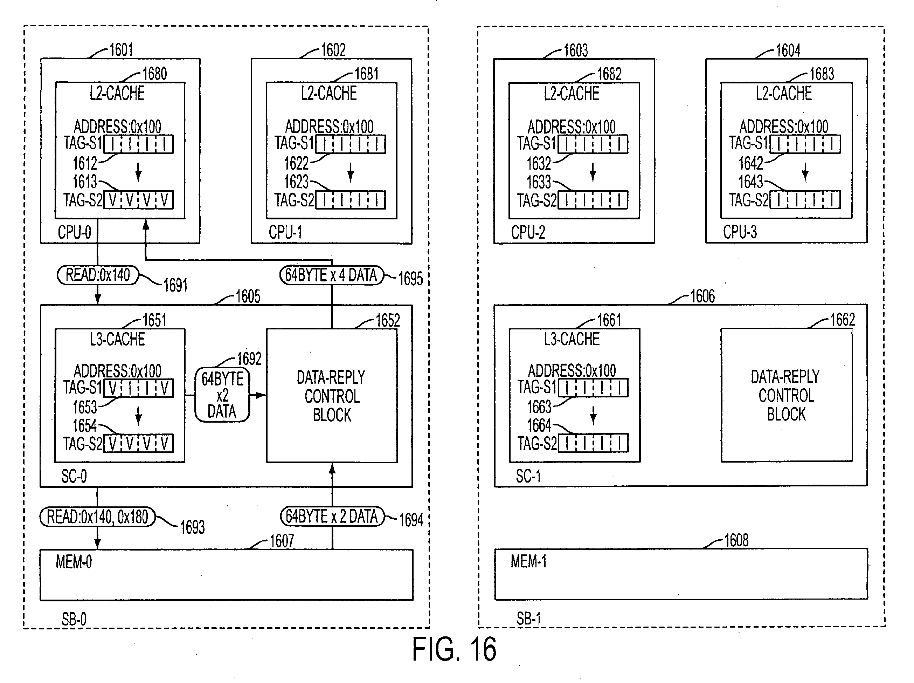

Fig. 16 illustrates part 1 of the special operation for reply data by the data block of 64 bytes in the structure of the present invention. Structure of each LSI mounted on the system board-0 (SB-0) and system board-1 (SB-1) is similar to that of Fig. 9 to Fig. 15.

Fig. 16 illustrates an access operation in the structure of the present invention, in which none of the data blocks of 64 bytes among the data entries of 256 bytes including the data block of 64 bytes as the object of the read request from the CPU exists in the level-2 cache memories (L2-CACHE). The data block of 64 bytes as the object of the read request does not exist in the level-3 cache memories (L3-CACHE) but the other data block of 64 bytes exist in the valid status in the level-3 cache memories (L3-CACHE).

Here, in Fig. 16, the tag status (TAG-S1) 1653 in the level-3 cache memory (L3-CACHE) 1651 before generation of the read access stores, in the invalid status (I), the data block of 64 bytes from the address 0x140 as the object of the read address among the data blocks of 256 bytes including the data block of 64 bytes from the address 0x140 as the object of the read request from the CPU-0 1601. The bits for any of the other data blocks of 64 bytes store the valid status (V). In addition, the tag status (TAG-S1) 1663 in the level-3 cache memory (L3-CACHE) 1661 and tag status (TAG-31) 1612, 1622, 1632 and 1642 in the level-2 cache memories (L2-CACHE) are all storing the invalid status (I), and the data block of 64 bytes from the address 0x140 as the object of the read request from the CPU-0 1601 exists in the main memory-0 (MEM-0) 1607 in the valid status.

In this case, the level-3 cache memory (L3-CACHE) 1651 in the system controller-0 (SC-0) 1605 having received the read request 1691 for the address 0x140 from the level-2 cache memory (L2-CACHE) 1680 in the CPU-0 1601 issues a reply data formed of the data block of 64 bytes starting from the address 0x100 and the data block of 64 bytes starting from the address 0x1 C0 to the data reply control block (DATA-REPLY CONTROL BLOCK) 1652 and in addition, issues the read request 1693 for the data block of 64 bytes starting from the address 0x140 and the data block of 64 bytes starting from the address 0x180 to the main memory-0 (MEM-0) 1607 and also receives the reply data 1694 formed of the corresponding data block of 128 bytes.

Moreover, the data reply control block (DATA-REPLY CONTROL BLOCK) 1652 in the system controller-0 (SC-0) 1605 merges the reply data 1692 by the data block of 128 bytes transmitted from the level-3 cache memory (L3-CACHE) 1651 and the reply data 1694 by the data block of 128 bytes transmitted from the main memory-0 (MEM-0) and completes the read access by transmitting the reply data 1695 formed of the data block of 256 bytes to the level-2 cache memory (L2-CACHE) 1611 in the CPU-0 1601.

Here, the tag status (TAG-S2) 1654 in the level-3 cache memory (L3-CACHE) 1651 after completion of the read access is changed to the valid status (V) from the invalid status (I) in all bits, the tag status (TAG-S2) 1613 in the level-2 cache memory (L2-CACHE) 1680 is changed in all bits to the valid status (V status) from the invalid status (I status), and in addition, any of the tag status (TAG-S2) 1664 of the level-3 cache memory (L3-CACHE) 1661 and the tag status (TAG-S2) 1623, 1633 and 1643 of the other level-2 cache memories (L2-CACHE) does not change from the status before generation of the read access.

### Merge Operation in Reply of Data Block of 256 Bytes in the Embodiment of the present invention: Part 2

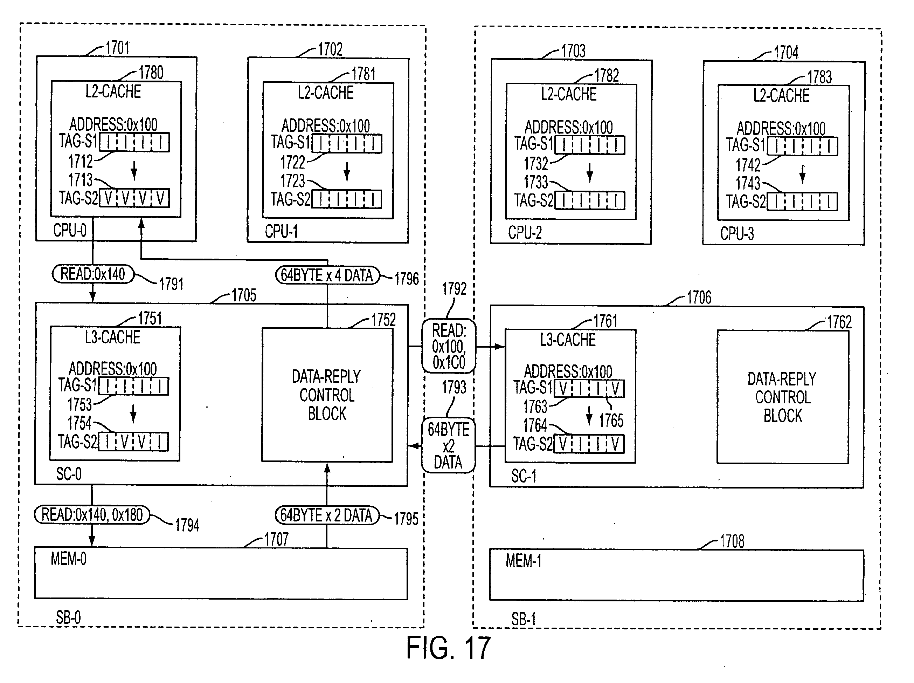

Fig. 17 illustrates part 2 of the specification operation in reply of data by the data block of 256 bytes in the structure of the present invention. Structure of each LSI mounted on the system board-0 (SB-0) and the system board-1 (SB-1) is similar to that of Fig. 9 to Fig. 16.

Fig. 17 illustrates the access operation with a structure of the present invention, in which none of the data blocks of 64 bytes among the data entries of 256 bytes including the data block of 64 bytes as the object of the read request from the CPU exists in the secondary block (L2-CACHE).

The data block of 64 bytes as the object of the read request does not exist in the level-3 cache memories (L3-CACHE), but the other data blocks (i.e., 1762, 1765) of 64 bytes in the identical data entry of 256 bytes exists in the valid status in the level-3 cache memory (L3-CACHE) within the non-local system controller (SC).

Here, in Fig. 17, the tag status (TAG-S1) 1753 in the level-3 cache memory (L3-CACHE) 1751 before generation of the read access stores, in the invalid status (I) the data block of 64 bytes from the address 0x140 as the object of the read request among the data blocks of 256 bytes including the data block of 64 bytes from the address. The bits for any of the other data blocks of 64 bytes store the valid status (V) (i.e., 1763 and 1765). In addition, the tag status (TAG-S1) 1763 in the level-3 cache memory (L3-CACHE) 1761 and the tag status (TAG-S1) 1712, 1722, 1732 and 1742 in each level-2 cache memory (L2-CACHE) are all storing the invalid status (I), and the data block of 64 bytes from the address 0x140 as the object of the read request from the CPU-0 1701 exists in the valid status only in the main memory-0 (MEM-0) 1707.

In this case, the system controller-0 (SC-0) 1705 having received the read request 1791 to the address 0x140 from the level-2 cache memory (L2-CACHE) 1780 in the CPU-0 1701 issues the read request 1792 for the data block of 64 bytes formed of the data block of 64 bytes starting from the address 0x100 and the data block of 64 bytes starting from the address 0x1 C0 to the system controller-1 (SC-1), receives the reply data formed of the data block of 128 bytes corresponding to the read request 1792, and in addition, issues, to the main memory-0 (MEM-0) 1707, the read request for the data block of 64 bytes starting from the address 0x140 and the data block of 64 bytes starting from the address 0x180 and also receives the reply data 1795 formed of the corresponding data block of 128 bytes.

Finally, the data reply control block (DATA-REPLY CONTROL BLOCK) 1752 in the system controller LSI-0 (SC-0) 1705 merges the reply data 1793 including the data block of 128 bytes transmitted from the level-3 cache memory (L3-CACHE) 1761 and the reply data 1795 including the data block of 128 bytes transmitted from the main memory-0 (MEM-0) 1707 and completes the read access by transmitting the reply data 1796 formed of the data block of 256 bytes to the level-2 cache memory (L2-CACHE) 1780 in the CPU-0 1701.

Here, the tag status (TAG-S2) 1754 in the level-3 cache memory (L3-CACHE) 1751 after completion of the read access is changed to the valid status (V) from the invalid status (I) in the bits corresponding to the data block of 64 bytes from the address 0x140 and the data block of 64 bytes from the address 0x180, the tag status (TAG-S2) 1713 in the level-2 cache memory (L2-CACHE) 1780 is changed in all bits to the valid status (V) from the invalid status (I), in addition, any of the tag status (TAG-S2) 1764 of the level-3 cache memory (L3-CACHE) 1761 and the tag status (TAG-S2) 1723, 1733 and 1743 of the other level-2 cache memories (L2-CACHE) does not change from the status before generation of the read access.

From the description of the operations with reference to Fig. 16 and Fig. 17, the reply data for the read request issued to the system controller (SC) in the own system board (SB) from the CPU can be scattered and stored in the main memory (MEM) 1707 and the level-3 cache memory (L3-CACHE) 1706 in the system controller (SC) on the other system board (SB) in the memory controller comprising the level-3 cache memory (L3-CACHE). The necessary data can be transferred to the level-2 cache memory 1711 of the CPU-0 1701 with single access and useless access is eliminated. In other words, a reply is executed by simultaneously receiving and merging the data from a plurality of storage devices such as the level-3 cache memory (L3-CACHE) 17612 and main memory 1707 or the like.

The preferred embodiments and operations thereof of the present invention have been described above in detail, but the practical structure of the present invention is not limited thereto. Thus various changes and modifications may be made to the embodiments without departing from the scope of the claims of the present invention.
In accordance with the invention, in a memory controller such as a system controller (SC) including a level-3 cache memory (L3-CACHE) for common use of data with a level-2 cache memory (L2-CACHE) within a CPU by forming a chip set such as a server, an effective memory controller and a control method are realized to store the necessary data into the level-2 cache memory (L2 CACHE) of the CPU with a single access, thereby reducing or eliminating deterioration of performance and suppression of throughput caused by memory latency.

## Claims

1. A memory controller connected to at least one CPU including a first cache memory (L2-CACHE) and a main memory (MEM) to execute a process for a read request from any CPU, said controller comprising:
a second cache memory (L3-CACHE) ; and
a control block respectively issuing a read request to a storing area of a data block within the first cache memory (L2-CACHE) or the second cache memory (L3-CACHE) as an object of the read request and to a storing area of another data block included in an entry to which the said data block belongs.

2. A memory controller connected to at least one CPU including a first cache memory (L2-CACHE) and a main memory (MEM) to execute a process for a read request from any CPU, said controller comprising:
a second cache memory (L3-CACHE); and
a control block for comparing a valid status of a data block in the first (L2-CACHE) and said second (L3-CACHE) cache memories with the read request from any CPU and issuing a read request to respective storing areas when the data block for the read request and other data blocks included in an entry to which a relevant data block belongs are stored into a plurality of storing areas.

3. A memory controller connected to at least one CPU including a first cache memory (L2-CACHE) and a main memory (MEM) to execute a process for a read request from any CPUs, said controller comprising:
a second cache memory (L3-CACHE);
a first tag memory storing a valid status of each data block included in the first cache memory (L2-CACHE) to which a CPU belongs;
a second tag memory storing the valid status of each data block included in the second cache memory (L3-CACHE); and
a control block comparing contents of the first and said second tag memories with a read request from any CPU and issuing a read request to respective storing areas when the data block corresponding to the read request and other data blocks included in an entry to which a relevant data block belongs are stored into a plurality of storing areas included within the first and second cache memories.

4. The memory controller described in claim 1, 2 or 3, wherein the control block receives a plurality of data blocks transmitted respectively from a plurality of storing areas and transmits the data block to the CPU by merging a plurality of received data blocks into one data block.

5. The memory controller described in claim 1, wherein when at least one data block among other data blocks included in an entry to which the at least one data block corresponding to the read request, issued from the at least one CPU connected directly to the memory controller, is stored into the second cache memory, the memory controller merges the data blocks transmitted from a plurality of storing areas into one entry and then transmit said entry to the at least one CPU.

6. An information processor, comprising:
at least one CPU;
a first cache memory (L2-CACHE) provided to the CPU to include a plurality of entries formed of a plurality of data blocks;
a main memory (MEM);
at least one memory controller (SC) for processing read requests from the CPU; and
a second cache memory (L3-CACHE) provided to the memory controller to include a plurality of entries formed of a plurality of data blocks; and
wherein the memory controller issues a read request to respective storing areas within the first or said second cache memories when a data block corresponding to the read request and other data blocks included in an entry to which a relevant data block belongs are scattered and stored into a plurality of storing areas.

7. The information processor described in claim 6, further comprising:
a plurality of memory controllers (SC-0, SC-1), and
wherein one memory controller (SC-1) inspects, when a read request is issued from a CPU connected to another memory controller (SC-0), a storing area of a data block corresponding to a relevant request by comparing a valid status of the data block in the first and second cache memories with the read request from the CPU connected to the other memory controller, and transmits the data block to the other memory controller when a result of inspection proves that the data block and at least one data block among the other data blocks included in an entry to which the data block belongs are stored into the first cache memory provided to the CPU connected to said one memory controller or to the second cache memory provided in said one memory controller.

8. The information processor described in claims 6, **characterized in that** the memory controller (SC) receives a data block respectively transmitted from a plurality of storing areas within the first (L2-CACHE) and said second (L3-CACHE) cache memories and corresponding to a read request issued therefrom and merges a plurality of received data blocks into an entry for transmission to the CPU.

9. A memory control method for a memory controller to execute a read request at least from one CPU, comprising:
receiving the read request issued from any CPU;
comparing a valid status of a data block included in a cache memory (L2-CACHE) within the CPU and the valid status of the data block included in the cache memory (L3-CACHE) within the memory controller with the read request; and
issuing the read request to respective storing areas within the first or second cache memories when a comparison result proves that the data block corresponding to the read request and other data blocks included in an entry to which a relevant data block belongs are scattered and stored into a plurality of storing areas.

10. The memory control method described in claim 9, further comprising:
receiving the data blocks respectively transmitted from a plurality of storing areas within the first or second cache memories and corresponding to the read request issued from the memory controller; and
transmitting a plurality of received data blocks to the CPU by merging such data blocks into one entry.

11. The information processor described in claim 6, wherein, when at least one data block among a valid data corresponding to the read request issued from the CPU connected directly to the memory controller is stored in the cache memory of the memory controller, the data block and the data blocks transmitted from a plurality of storing areas are transmitted to the CPU by merging these data blocks into one entry with the memory controller.

12. The information processor described in claim 6, wherein the memory controller (SC-1) includes a second pipeline (GLOBAL PIPELINE) for inspecting a storing area of valid data corresponding to the read request by comparing contents of first and second tag memories with the read request issued from the CPU connected directly to another memory controller (SC-0) via a data transmission path, and the memory controller transmits the data block to the other memory controller when a result of inspection proves that at least one data block among the valid data corresponding to the read request is stored in the cache memory of a local memory controller.

13. A memory controller (SC-0) connected to at least one CPU and a main memory (MEM) and also connected to another memory controller (SC-1) via a data transmission path and including a first cache memory (L3-CACHE) in which an entry is formed of a plurality of data blocks and a first tag memory (L3-TAG) for storing a valid flag of data blocks in order to execute a read request from the CPU in a unit of a data block or entry, a second tag memory (L2-TAG2) for storing, by a copying process, contents of tag memory included in all CPUs connected directly to the memory controller (SC-0), and a first pipeline (LOCAL PIPELINE) for inspecting storing area of the valid data corresponding to a read request by comparing the contents of the first and said second tag memories with the read request issued from any CPU connected directly to the memory controller (SC-0),
wherein the read request is issued to respective storing areas when a inspection result proves that the data block corresponding to the read request and the other data blocks included in an entry to which a relevant data block belongs are scattered and stored into a plurality of storing areas.

14. A method for retrieving data from a layered data storage system, comprising:
receiving a request to read an entry included within a data block containing valid and invalid entries, wherein at least one valid entry is stored in a data storage area different from a data storage area of at least one invalid entry;
reading valid versions of said invalid entries from a first storage area to convert said invalid entries to valid; and
merging said converted entries with valid entries from a second storage area.

15. The method of claim 14, wherein said reading includes determining valid and invalid entries via status tags.

16. The method of claim 14 or 15, wherein said reading includes reading said valid versions of said invalid entries from a first data storage area wherein said first storage area is a main memory (MEM).

17. The method of claim 14, 15 or 16, wherein said reading includes reading said valid entries from a second data storage area wherein said second data storage area is a third level cache memory (L3-CACHE).

18. An apparatus for allowing effective memory control, comprising:
a unit merging a valid entry included within a data block of a first data storage area with a valid version of a previously invalid entry, which valid version is retrieved from a second data storage area.
wherein the first data storage area is either (i) a third level cache memory (L3-CACHE) included within a system controller (SC) residing on a circuit board (SB) the same as a circuit board on which a central processing unit (CPU) requesting data resides, or (ii) a third level cache memory (L3-CACHE) residing on a circuit board (SB) different than the circuit board on which the central processing unit (CPU) requesting data resides,
and said second data storage area is a main memory (MEM).

19. The apparatus of claim 18, wherein said unit is a data-reply control block.
